# EUROPÄISCHE PATENTSCHRIFT

(11) **EP 4 036 663 B1**
(45) Veröffentlichungstag und Bekanntmachung des Hinweises auf die Patenterteilung: **30.07.2025**
(21) Anmeldenummer: 21154166.9
(22) Anmeldetag: 29.01.2021
(51) Int. Cl.: G05B 13/02

(54) **STEUEREINRICHTUNG ZUM STEUERN EINES TECHNISCHEN SYSTEMS UND VERFAHREN ZUM KONFIGURIEREN DER STEUEREINRICHTUNG**
CONTROL SYSTEM FOR CONTROLLING A TECHNICAL SYSTEM AND METHOD FOR CONFIGURING THE CONTROL DEVICE
DISPOSITIF DE COMMANDE PERMETTANT DE COMMANDER UN SYSTÈME TECHNIQUE ET PROCÉDÉ DE CONFIGURATION DU DISPOSITIF DE COMMANDE

(43) Veröffentlichungstag der Anmeldung: 03.08.2022
(73) Patentinhaber: Siemens Aktiengesellschaft, 80333 München (DE)
(72) Erfinder: Hein, Daniel, 81549 München (DE); Schöner, Holger, 81739 München (DE); Weber, Marc Christian, 80339 München (DE); Heesche, Kai, 81539 München (DE); Sterzing, Volkmar, 85579 Neubiberg (DE); Udluft, Steffen, 82223 Eichenau (DE)
(74) Vertreter: Siemens Patent Attorneys

(56) Entgegenhaltungen:
- EP-A1- 3 588 211
- DE-A1- 102018 004 923
- US-B1- 6 882 992

## Beschreibung

Bei der Steuerung komplexer technischer Systeme, wie z. B. Gasturbinen, Windturbinen, Verbrennungskraftmaschinen, Robotern, Fertigungsanlagen oder Stromnetzen werden zunehmend Verfahren des maschinellen Lernens eingesetzt. Mittels derartiger Lernverfahren kann ein Maschinenlernmodell einer Steuereinrichtung anhand von Trainingsdaten darauf trainiert werden, ausgehend von aktuellen Betriebssignalen eines technischen Systems, diejenigen Steueraktionen zum Steuern des technischen Systems zu ermitteln, die spezifisch ein gewünschtes oder optimiertes Verhalten des technischen Systems bewirken und damit dessen Performanz optimieren. Ein derartiges Maschinenlernmodell zum Steuern eines technischen Systems wird häufig auch als Policy oder Steuermodell bezeichnet. Zum Trainieren einer solchen Policy steht eine Vielzahl bekannter Trainingsverfahren, wie z. B. Verfahren des bestärkenden Lernens zur Verfügung.

Bei Steuerungsoptimierungen im industriellen Umfeld treten jedoch bei vielen bekannten Trainingsverfahren Konvergenzprobleme und/oder Probleme hinsichtlich einer Wiederholbarkeit von Lernprozessen auf. Dies kann beispielsweise darauf zurückzuführen sein, dass nur ein kleiner Teil eines Zustandsraums des technischen Systems berücksichtigt wird, dass Sensordaten des technischen Systems verrauscht sind und/oder dass sich Steueraktionen in der Regel zeitverzögert auswirken, wobei unterschiedliche Steueraktionen oft zu unterschiedlichen Zeitverzögerungen führen. Die vorstehenden Symptome treten bei komplexen realen Systemen häufig auf und können einen Lernerfolg erheblich beeinträchtigen.

EP 3 588 211 Al offenbart ein computerimplementiertes Verfahren zum Konfigurieren einer Steuereinrichtung für ein technisches System.

Es ist Aufgabe der vorliegenden Erfindung, eine Steuereinrichtung zum Steuern eines technischen Systems sowie ein Verfahren zum Konfigurieren der Steuereinrichtung anzugeben, die ein effizienteres Training erlauben.

Gelöst wird diese Aufgabe durch ein Verfahren mit den Merkmalen des Patentanspruchs 1, durch eine Steuereinrichtung mit den Merkmalen des Patentanspruchs 11, durch ein Computerprogrammprodukt mit den Merkmalen des Patentanspruchs 12 sowie durch ein computerlesbares Speichermedium mit den Merkmalen des Patentanspruchs 13.

Zum Konfigurieren einer Steuereinrichtung für ein technisches System wird ein Betriebssignal des technischen Systems in ein erstes Maschinenlernmodul eingespeist, das darauf trainiert ist, anhand eines Betriebssignals des technischen Systems ein spezifisch ohne aktuelle Anwendung einer Steueraktion entstehendes Verhaltenssignal des technischen Systems zu reproduzieren und das reproduzierte Verhaltenssignal als erstes Ausgabesignal auszugeben. Das erste Ausgabesignal wird in ein zweites Maschinenlernmodul eingespeist, das darauf trainiert wird, anhand eines Steueraktionssignals ein daraus resultierendes Verhaltenssignal des technischen Systems zu reproduzieren und das reproduzierte Verhaltenssignal als zweites Ausgabesignal auszugeben. Weiterhin werden ein Betriebssignal des technischen Systems in ein drittes Maschinenlernmodul und ein drittes Ausgabesignal des dritten Maschinenlernmoduls in das trainierte, zweite Maschinenlernmodul eingespeist. Anhand des zweiten Ausgabesignals wird eine Steueraktionsperformanz ermittelt. Damit wird das dritte Maschinenlernmodul darauf trainiert, anhand eines Betriebssignals des technischen Systems die Steueraktionsperformanz zu optimieren. Anhand des dritten Maschinenlernmoduls wird schließlich die Steuereinrichtung dazu eingerichtet, das technische System mittels eines dritten Ausgabesignals des dritten Maschinenlernmoduls zu steuern.

Zum Ausführen des erfindungsgemäßen Verfahrens sind eine Steuereinrichtung, ein Computerprogrammprodukt sowie ein vorzugsweise nichtflüchtiges computerlesbares Speichermedium vorgesehen.

Das erfindungsgemäße Verfahren sowie die erfindungsgemäße Steuereinrichtung können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden.

Durch die Erfindung kann eine Steuereinrichtung erheblich effizienter konfiguriert bzw. trainiert werden. Insofern beim Training des dritten Maschinenlernmoduls das trainierte zweite Maschinenlernmodul verwendet wird, müssen wesentliche Komponenten eines Systemverhaltens beim Training des dritten Maschinenlernmoduls in der Regel nicht mehr implizit gelernt oder dargestellt werden. Dies führt in vielen Fällen zu einem erheblich verbesserten Konvergenzverhalten und/oder zu einer besseren Wiederholbarkeit von Trainingsergebnissen. Das Training wird zudem häufig stabiler und/oder robuster gegenüber Variationen in den Trainingsdaten. Darüber hinaus werden in vielen Fällen weniger Trainingsdaten, Rechenzeit und/oder Rechenressourcen benötigt.

Vorteilhafte Ausführungsformen und Weiterbildungen der Erfindung sind in den abhängigen Ansprüchen angegeben.

Nach einer vorteilhaften Ausführungsform der Erfindung kann das Training des dritten Maschinenlernmoduls anhand des ersten Ausgabesignals erfolgen. Hierdurch kann das dritte Maschinenlernmodul oft besonders effektiv trainiert werden, da dem drittem Maschinenlernmodul eine spezifische Information über ein Systemverhalten ohne aktuelle Anwendung einer Steueraktion zur Verfügung steht.

Gemäß einer besonders vorteilhaften Ausführungsform der Erfindung kann die Ermittlung der Steueraktionsperformanz für einen jeweiligen Zeitpunkt jeweils anhand eines einzigen Zeitschritts eines Verhaltenssignals erfolgen. Eine aufwändige Ermittlung oder Schätzung zukünftiger Auswirkungen auf eine Performanz ist häufig nicht erforderlich. Somit können auch auf unterschiedlichen Zeitskalen ablaufende dynamische Effekte in effizienter Weise berücksichtigt werden. Der Zeitschritt kann darüber hinaus abhängig von einer Steueraktion und/oder eines Verhaltenssignals unterschiedlich lang sein und auch weiter in der Zukunft liegende Auswirkungen von Steueraktionen abbilden.

Vorteilhafterweise können erste und/oder zweite Teile eines Betriebssignals des technischen Systems spezifisch danach selektiert werden, ob sie eine Steueraktion umfassen oder nicht. Damit können eine Steueraktion nicht umfassende, erste Teile des Betriebssignals spezifisch zum Training des ersten Maschinenlernmoduls und/oder eine Steueraktion umfassende, zweite Teile des Betriebssignals spezifisch zum Training des zweiten Maschinenlernmoduls verwendet werden. Durch eine spezifische, auf ein jeweiliges Trainingsziel hin ausgerichtete Selektion von Trainingsdaten können das erste und/oder das zweite Maschinenlernmodul besonders effektiv trainiert werden.

Nach einer weiteren vorteilhaften Ausführungsform der Erfindung können ein Verhaltenssignal-Sollwert eingelesen und das zweite Ausgabesignal mit dem Verhaltenssignal-Sollwert verglichen werden. Damit kann die Steueraktionsperformanz abhängig vom Vergleichsergebnis ermittelt werden. Insbesondere kann eine Abweichung zwischen dem zweiten Ausgabesignal und dem Verhaltenssignal-Sollwert, z. B. in Form eines Differenzbetrags oder Differenzquadrats, ermittelt werden. Die Steueraktionsperformanz kann dann abhängig von der Abweichung ermittelt werden, wobei eine größere Abweichung in der Regel zu einer geringeren Steueraktionsperformanz führt.

Der Verhaltenssignal-Sollwert kann weiterhin in das dritte Maschinenlernmodul eingespeist werden. Damit kann das dritte Maschinenlernmodul darauf trainiert werden, anhand des Verhaltenssignal-Sollwerts die Steueraktionsperformanz zu optimieren.

Nach einer weiteren vorteilhaften Ausführungsform der Erfindung kann die Ermittlung der Steueraktionsperformanz anhand des ersten Ausgabesignals erfolgen. Dabei kann insbesondere eine Abweichung zwischen dem ersten Ausgabesignal und dem zweiten Ausgabesignal, z. B. in Form eines Differenzbetrags oder Differenzquadrats ermittelt werden. Alternativ oder zusätzlich kann eine Abweichung einer Summe des ersten und zweiten Ausgabesignals von einem Verhaltenssignal-Sollwert ermittelt werden. Die Steueraktionsperformanz kann dann abhängig von einer so bestimmten Abweichung ermittelt werden. Hierbei kann anhand der Abweichung insbesondere bewertet werden, wie sich ein Systemverhalten mit Anwendung einer Steueraktion vom Systemverhalten ohne Anwendung dieser Steueraktion unterscheidet. Es erweist sich, dass die Ermittlung der Steueraktionsperformanz durch diese Unterscheidung in vielen Fällen erheblich verbessert werden kann.

Nach einer vorteilhaften Weiterbildung der Erfindung kann das erste und/oder das zweite Maschinenlernmodul darauf trainiert sein, mehrere Verhaltenssignale unterschiedlicher im technischen System ablaufender Prozesse separat zu reproduzieren. Die Steueraktionsperformanz kann dann abhängig von den reproduzierten Verhaltenssignalen ermittelt werden. Das erste und/oder zweite Maschinenlernmodul kann dazu insbesondere einen Satz von Maschinenlernmodellen oder -Teilmodellen umfassen, die jeweils einen spezifischen im technischen System ablaufenden Prozess prozessspezifisch modellieren. Ein derartiges separiertes Training erweist sich in vielen Fällen als effizienter als ein kombiniertes Training, da die jeweils zugrundeliegende Einzeldynamiken für sich genommen in der Regel ein einfacheres Antwortverhalten aufweisen als eine kombinierte Systemdynamik.

Insofern die Erfindung erlaubt, die Steueraktionsperformanz zu einem jeweiligen Zeitpunkt anhand eines einzigen, ggf. anpassbaren Zeitschritts eines Verhaltenssignals zu ermitteln, treten insbesondere beim Training des dritten Maschinenlernmoduls in der Regel weniger Synchronisationsprobleme zwischen Prozessen mit unterschiedlichen Ablaufgeschwindigkeiten auf. In vielen Fällen zeigt sich, dass für verschiedene prozessspezifische Maschinenlernmodelle eine verhältnismäßig präzise und robuste Bewertung der Steueraktionsperformanz in einem einzigen Schritt vorgenommen werden kann.

Weiterhin kann für ein jeweiliges Verhaltenssignal ein spezifischer Verhaltenssignal-Sollwert eingelesen werden. Die Steueraktionsperformanz kann dann anhand eines Vergleichs der reproduzierten Verhaltenssignale mit den spezifischen Verhaltenssignal-Sollwerten ermittelt werden.

Insbesondere kann das dritte Maschinenlernmodul darauf trainiert werden, anhand der spezifischen Verhaltenssignal-Sollwerte die Steueraktionsperformanz zu optimieren.

Ein Ausführungsbeispiel der Erfindung wird nachfolgend anhand der Zeichnung näher erläutert. Dabei zeigen jeweils in schematischer Darstellung:
- Figur 1: eine Gasturbine mit einer erfindungsgemäßen Steuereinrichtung,
- Figur 2: eine erfindungsgemäße Steuereinrichtung in einer ersten Trainingsphase,
- Figur 3: die Steuereinrichtung in einer zweiten Trainingsphase und
- Figur 4: die Steuereinrichtung in einer dritten Trainingsphase.

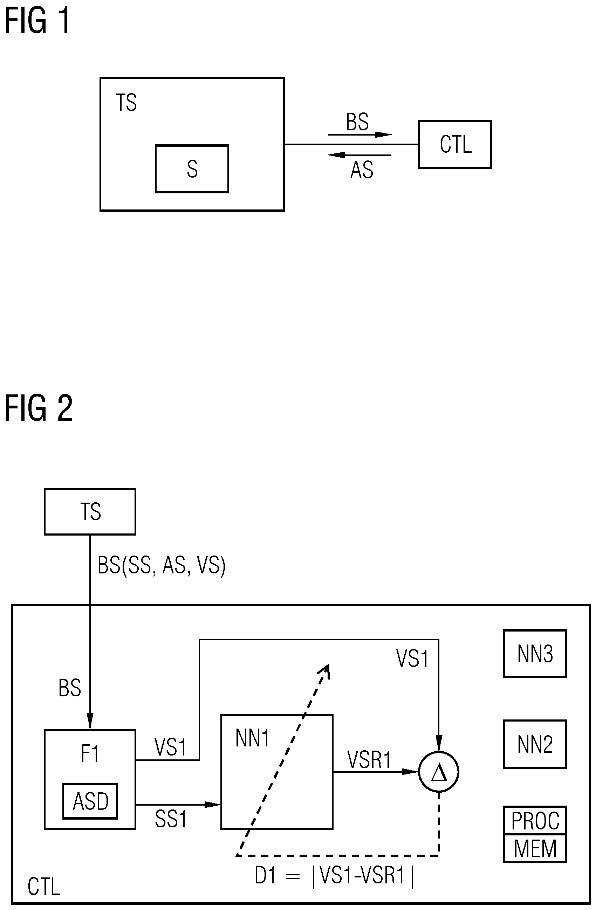

Figur 1 veranschaulicht beispielhaft eine Gasturbine als technisches System TS mit einer Steuereinrichtung CTL. Alternativ oder zusätzlich kann das technische System TS auch eine Windturbine, eine Verbrennungskraftmaschine, eine Fertigungsanlage, einen chemischen, metallurgischen oder pharmazeutischen Herstellungsprozess, einen Roboter, ein Kraftfahrzeug, ein Energieübertragungsnetz, einen 3D-Drucker oder eine andere Maschine, ein anderes Gerät oder eine andere Anlage umfassen.

Die Gasturbine TS ist mit der Steuereinrichtung CTL gekoppelt, die als Teil der Gasturbine TS oder ganz oder teilweise extern zur Gasturbine TS implementiert sein kann. In Figur 1 ist die Steuereinrichtung CTL aus Übersichtlichkeitsgründen extern zum technischen System TS dargestellt.

Die Steuereinrichtung CTL dient zum Steuern des technischen Systems TS und ist zu diesem Zweck mittels eines maschinellen Lernverfahrens trainiert. Unter einem Steuern des technischen Systems TS sei hierbei auch ein Regeln des technischen Systems TS sowie eine Ausgabe und Verwendung von steuerungsrelevanten, d. h. zum Steuern des technischen Systems TS beitragenden Daten oder Signalen verstanden.

Derartige steuerungsrelevante Daten oder Signale können insbesondere Steueraktionssignale, Prognosedaten, Überwachungssignale, Zustandsdaten und/oder Klassifikationsdaten umfassen, die insbesondere zur Betriebsoptimierung, Überwachung oder Wartung des technischen Systems TS und/oder zur Verschleiß- oder Beschädigungserkennung verwendet werden können.

Die Gasturbine TS verfügt über Sensoren S, die fortlaufend einen oder mehrere Betriebsparameter des technischen Systems TS messen und als Messwerte ausgeben. Die Messwerte der Sensoren S sowie gegebenenfalls anderweitig erfasste Betriebsparameter des technischen Systems TS werden als Betriebssignale BS vom technischen System TS zur Steuereinrichtung CTL übermittelt.

Die Betriebssignale BS können insbesondere physikalische, chemisch, regelungstechnische, wirkungstechnische und/oder bauartbedingte Betriebsgrößen, Eigenschaftsdaten, Leistungsdaten, Wirkungsdaten, Zustandssignale, Verhaltenssignale, Systemdaten, Vorgabewerte, Steuerdaten, Steueraktionssignale, Sensordaten, Messwerte, Umgebungsdaten, Überwachungsdaten, Prognosedaten, Analysedaten und/oder anderen Betrieb des technischen Systems TS anfallende und/oder einen Betriebszustand oder eine Steueraktion des technischen Systems TS beschreibende Daten umfassen. Dies können beispielsweise Daten über Temperatur, Druck, Emissionen, Vibrationen, Schwingungszustände oder Ressourcenverbrauch des technischen Systems TS sein. Speziell bei einer Gasturbine können die Betriebssignale BS eine Turbinenleistung, eine Rotationsgeschwindigkeit, Vibrationsfrequenzen, Vibrationsamplituden, Verbrennungsdynamiken, Verbrennungswechseldruckamplituden oder Stickoxidkonzentrationen betreffen.

Anhand der Betriebssignale BS ermittelt die trainierte Steuereinrichtung CTL Steueraktionen, die eine Performanz des technischen Systems TS optimieren. Die zu optimierende Performanz kann dabei insbesondere eine Leistung, einen Ertrag, eine Geschwindigkeit, eine Laufzeit, eine Präzision, eine Fehlerrate, einen Ressourcenbedarf, einen Wirkungsgrad, einen Schadstoffausstoß, eine Stabilität, einen Verschleiß, eine Lebensdauer und/oder andere Zielparameter des technischen Systems TS betreffen.

Die ermittelten, performanzoptimierenden Steueraktionen werden von der Steuereinrichtung CTL durch Übermittlung entsprechender Steueraktionssignale AS zum technischen System TS veranlasst. Durch die Steueraktionen können z. B. bei einer Gasturbine eine Gaszufuhr, eine Gasverteilung oder eine Luftzufuhr eingestellt werden.

Figur 2 zeigt in schematischer Darstellung eine erfindungsgemäße, lernbasierte Steuereinrichtung CTL in einer ersten Trainingsphase. Die Steuereinrichtung CTL soll zum Steuern eines technischen Systems TS konfiguriert werden. Insofern in den Figuren die gleichen oder korrespondierende Bezugszeichen verwendet werden, bezeichnen diese Bezugszeichen die gleichen oder korrespondierende Entitäten.

Im vorliegenden Ausführungsbeispiel ist die Steuereinrichtung CTL an das technische System TS gekoppelt. Die Steuereinrichtung CTL umfasst einen oder mehrere Prozessoren PROC zum Ausführen des erfindungsgemäßen Verfahrens sowie einen oder mehrere Speicher MEM zum Speichern von Verfahrensdaten.

Die Steuereinrichtung CTL empfängt vom technischen System TS Betriebssignale BS als Trainingsdaten. Die Betriebssignale enthalten insbesondere Zeitreihen, d. h. zeitliche Abfolgen von Werten von Betriebsparametern des technischen Systems TS. Im vorliegenden Ausführungsbeispiel enthalten die Betriebssignale BS Zustände des technischen Systems TS im Zeitverlauf spezifizierende Zustandssignale SS, Steueraktionen des technischen Systems TS spezifizierende oder veranlassende Steueraktionssignale AS sowie ein Systemverhalten des technischen Systems TS spezifizierende Verhaltenssignale VS. Letztere können beispielsweise Veränderungen von Verbrennungswechseldruckamplituden, Emissionen, einer Drehzahl oder einer Temperatur einer Gasturbine spezifizieren. Als Verhaltenssignale VS können insbesondere für eine Performanz des technischen Systems TS relevante Zustandssignale des technischen Systems TS erfasst werden.

Die Betriebssignale BS können zumindest teilweise auch von einem zum technischen System TS ähnlichen technischen System, von einer Datenbank mit gespeicherten Betriebssignalen des technischen Systems TS oder eines dazu ähnlichen technischen Systems und/oder von einer Simulation des technischen Systems TS oder eines dazu ähnlichen technischen Systems empfangen werden oder stammen.

Die Steuereinrichtung CTL umfasst weiterhin ein erstes Maschinenlernmodul NN1, ein zweites Maschinenlernmodul NN2 sowie ein drittes Maschinenlernmodul NN3. Ein jeweiliges Maschinenlernmodul NN1, NN2 bzw. NN3 kann hierbei insbesondere als künstliches neuronales Netz oder als eine Menge von neuronalen Teilnetzen ausgestaltet sein. Das erste Maschinenlernmodul NN1 kann insbesondere als Teilmodul des dritten Maschinenlernmoduls NN3 ausgestaltet sein.

Vorzugsweise können die Maschinenlernmodule NN1, NN2 und/oder NN3 ein Verfahren des überwachten Lernens, ein Verfahren des bestärkenden Lernens, ein rekurrentes neuronales Netz, ein faltendes neuronales Netz, ein bayessches neuronales Netz, einen Autoencoder, eine Deep-Learning-Architektur, eine Support-Vector-Machine, ein datengetriebenes trainierbares Regressionsmodell, einen k-nächste-Nachbarn-Klassifikator, ein physikalisches Modell, einen Entscheidungsbaum und/oder einen Random-Forest verwenden oder implementieren. Für die angegebenen Varianten und deren Training steht eine Vielzahl von effizienten Implementierungen zur Verfügung.

Unter einem Training sei hierbei allgemein eine Optimierung einer Abbildung von Eingabesignalen auf Ausgabesignale verstanden. Diese Abbildung wird nach vorgegebenen, gelernten und/oder zu lernenden Kriterien während einer Trainingsphase optimiert. Als Kriterien können hierbei z. B. bei Prädiktionsmodellen ein Prädiktionsfehler, bei Klassifikationsmodellen ein Klassifikationsfehler oder bei Steuermodellen ein Erfolg einer Steueraktion herangezogen werden. Durch das Training können beispielweise Vernetzungsstrukturen von Neuronen des neuronalen Netzes und/oder Gewichte von Verbindungen zwischen den Neuronen so eingestellt bzw. optimiert werden, dass die vorgegebenen Kriterien möglichst gut erfüllt werden. Das Training kann somit als Optimierungsproblem aufgefasst werden. Für derartige Optimierungsprobleme auf dem Gebiet des maschinellen Lernens sind eine Vielzahl von effizienten Optimierungsverfahren verfügbar. Insbesondere können Gradientenabstiegsverfahren, Partikelschwarmoptimierungen und/oder genetische Optimierungsverfahren verwendet werden.

In der durch Figur 2 veranschaulichten, ersten Trainingsphase wird das erste Maschinenlernmodul NN1 trainiert. Dieses soll darauf trainiert werden, anhand eines Betriebssignals des technischen Systems TS ein Verhalten des technischen Systems TS zu prädizieren oder zu reproduzieren, das sich ohne aktuelle Anwendung einer Steueraktion entwickeln würde.

Zur Verbesserung eines Trainingserfolgs werden die Trainingsdaten BS durch ein mit dem ersten Maschinenlernmodul NN1 gekoppeltes Filter F1 gefiltert, um bevorzugt Trainingsdaten ohne Steueraktion oder ohne Auswirkungen einer Steueraktion zu erhalten. Zu diesem Zweck werden die Betriebssignale BS in das Filter F1 eingespeist. Das Filter F1 umfasst einen Steueraktionsdetektor ASD zum Detektieren von Steueraktionen in den Betriebssignalen BS anhand von darin enthaltenen Steueraktionssignalen AS.

Abhängig von der Detektion von Steueraktionen durch den Steueraktionsdetektor ASD werden erste Teile der Betriebssignale BS durch das Filter F1 selektiert und aus den Betriebssignalen BS extrahiert. Dabei werden bevorzugt erste Teile der Betriebssignale BS selektiert, die keine Steueraktion und/oder keine Auswirkungen einer Steueraktion enthalten. So können die ersten Teile der Betriebssignale BS beispielsweise aus einem Zeitfenster nach einer detektierten aktuellen Steueraktion extrahiert werden, wobei das Zeitfenster so gewählt ist, dass sich diese Steueraktion noch nicht auf ein Systemverhalten auswirken kann.

Die gefilterten ersten Teile der Betriebssignale BS umfassen erste Teile SS1 der Zustandssignale SS und erste Teile VS1 der Verhaltenssignale VS. Die ersten Teile SS1 und VS1 werden durch das Filter F1 ausgegeben und zum Training des ersten Maschinenlernmoduls NN1 verwendet.

Die ersten Teile SS1 der Zustandssignale SS werden zum Training in das erste Maschinenlernmodul NN1 als Eingabesignal eingespeist. Durch das Training wird angestrebt, dass das erste Maschinenlernmodul anhand eines Betriebssignals des technischen Systems TS ein ohne aktuelle Anwendung einer Steueraktion entstehendes Verhaltenssignal des technischen Systems möglichst gut reproduziert. D. h. dass ein Ausgabesignal VSR1 des ersten Maschinenlernmoduls NN1, im Folgenden als erstes Ausgabesignal bezeichnet, möglichst gut mit dem tatsächlichen Verhaltenssignal des technischen Systems TS übereinstimmt. Zu diesem Zweck wird eine Abweichung D1 zwischen dem ersten Ausgabesignal VSR1 und den dazu korrespondierenden ersten Teilen VS1 der Verhaltenssignale VS ermittelt. Die Abweichung D1 repräsentiert hierbei einen Reproduktions- oder Prädiktionsfehler des ersten Maschinenlernmoduls NN1. Die Abweichung D1 kann insbesondere als Quadrat oder Betrag einer Differenz, insbesondere einer Vektordifferenz errechnet werden gemäß D1 = (VS1-VSR1)² oder D1 = |VS1-VSR1|.

Die Abweichung D1 wird, wie in Figur 2 durch einen strichlierten Pfeil angedeutet, zum ersten Maschinenlernmodul NN1 zurückgeführt. Anhand der zurückgeführten Abweichung D1 wird das erste Maschinenlernmodul NN1 darauf trainiert, diese Abweichung D1 und damit den Reproduktionsfehler zu minimieren. Zur Minimierung der Abweichung D1 steht, wie oben bereits angedeutet, eine Vielzahl von Optimierungsverfahren wie z. B. Gradientenabstiegsverfahren, Partikelschwarmoptimierungen oder genetische Optimierungsverfahren zur Verfügung. Auf diese Weise wird das erste Maschinenlernmodul NN1 durch ein überwachtes Lernverfahren trainiert. Das trainierte erste Maschinenlernmodul NN1 reproduziert mit dem ersten Ausgabesignal VSR1 ein Verhaltenssignal des technischen Systems TS, wie es ohne aktuelle Anwendung einer Steueraktion entstehen würde.

Indem die gefilterten Betriebssignale SS1 und VS1 zum Training verwendet werden, wird das erste Maschinenlernmodul NN1 besonders effektiv auf dieses Trainingsziel hin trainiert. Es sei noch angemerkt, dass das erste Maschinenlernmodul NN1 auch außerhalb der Steuereinrichtung CTL trainiert werden kann.

Das vorstehende Trainingsverfahren kann in besonders vorteilhafter Weise dazu verwendet werden, mehrere Verhaltenssignale unterschiedlicher im technischen System TS ablaufender Prozesse separat zu reproduzieren. Zu diesem Zweck kann das erste Maschinenlernmodul NN1 mehrere prozessspezifische neuronale Teilnetze umfassen, die jeweils separat oder individuell mit prozessspezifischen Verhaltenssignalen, wie oben beschrieben, trainiert werden. Ein derartiges separiertes Training erweist sich in vielen Fällen als effizienter als ein kombiniertes Training, da die jeweils zugrundeliegenden Einzeldynamiken für sich genommen in der Regel ein einfacheres und/oder einheitlicheres Antwortverhalten aufweisen.

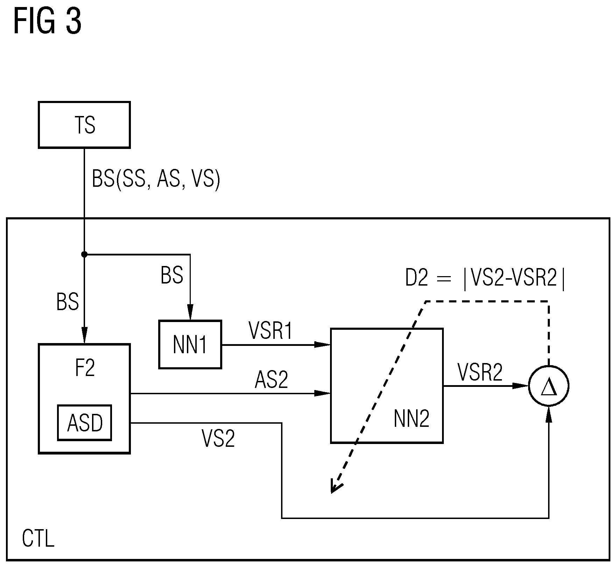

Figur 3 veranschaulicht die Steuereinrichtung CTL in einer zweiten Trainingsphase. In der zweiten Trainingsphase soll das zweite Maschinenlernmodul NN2 darauf trainiert werden, anhand eines Betriebssignals BS des technischen Systems TS, und insbesondere anhand eines darin enthaltenen Steueraktionssignals AS ein durch eine jeweilige Steueraktion induziertes Verhalten des technischen Systems TS zu prädizieren oder zu reproduzieren.

Zum Training des zweiten Maschinenlernmoduls NN2 empfängt die Steuereinrichtung CTL vom technischen System TS Betriebssignale BS des technischen Systems TS als Trainingsdaten. Wie oben bereits erwähnt, enthalten die Betriebssignale BS insbesondere Zeitreihen von Zustandssignalen SS, Steueraktionssignalen AS sowie Verhaltenssignalen VS. Zum Training des zweiten Maschinenlernmoduls NN2 wird zudem das trainierte erste Maschinenlernmodul NN1 verwendet. Im vorliegenden Ausführungsbeispiel ist beim Training des zweiten Maschinenlernmoduls NN2 das Training des ersten Maschinenlernmoduls NN1 bereits abgeschlossen.

Zur Verbesserung eines Trainingserfolgs werden die Trainingsdaten BS durch ein mit dem zweiten Maschinenlernmodul NN2 gekoppeltes Filter F2 gefiltert, um bevorzugt Trainingsdaten zu erhalten, die Steueraktionen oder Auswirkungen von Steueraktionen enthalten.

Zu diesem Zweck werden die Betriebsdaten BS in das Filter F2 eingespeist. Das Filter F2 enthält einen Steueraktionsdetektor ASD zum spezifischen Detektieren von Steueraktionen in den Betriebssignalen BS anhand darin enthaltener Steueraktionssignale AS. Abhängig von der Detektion von Steueraktionen durch den Steueraktionsdetektor ASD werden zweite Teile der Betriebssignale BS durch das Filter F2 selektiert und aus den Betriebssignalen BS extrahiert. Dabei werden bevorzugt zweite Teile der Betriebssignale BS selektiert, die Steueraktionen und/oder Auswirkungen von Steueraktionen umfassen. Beispielsweise können die zweiten Teile der Betriebssignale BS aus einem Zeitfenster um eine jeweils detektierte Steueraktion und/oder aus einem Zeitfenster, in dem eine Auswirkung der jeweiligen Steueraktion zu erwarten ist, extrahiert werden. Die gefilterten zweiten Teile der Betriebssignale BS umfassen insbesondere zweite Teile VS2 der Verhaltenssignale VS sowie mit Steueraktionssignalen angereicherte zweite Teile AS2. Die zweiten Teile AS2 und VS2 der Betriebssignale BS werden durch das Filter F2 ausgegeben und zum Training des zweiten Maschinenlernmoduls NN2 verwendet.

Zum Training werden die zweiten Teile AS2 der Betriebssignale BS in das zweite Maschinenlernmodul NN2 als Eingabesignal eingespeist. Weiterhin werden die Betriebssignale BS in das bereits trainierte erste Maschinenlernmodul NN1 eingespeist, das hieraus ein Verhaltenssignal VSR1 ableitet und als erstes Ausgabesignal ausgibt. Das Verhaltenssignal VSR1 reproduziert, wie oben beschrieben, ein Verhaltenssignal des technischen Systems TS, wie es ohne aktuelle Anwendung einer Steueraktion entstehen würde. Das Verhaltenssignal VSR1 wird als weiteres Eingabesignal in das zweite Maschinenlernmodul NN2 eingespeist.

Durch das Training wird angestrebt, dass das zweite Maschinenlernmodul NN2 anhand eines Steueraktionen enthaltenen Betriebssignals, hier AS2, sowie anhand eines ohne aktuelle Anwendung einer Steueraktion entstehenden Verhaltenssignals, hier VSR1, ein durch die Steueraktionen induziertes Verhaltenssignal des technischen Systems TS möglichst genau reproduziert. D. h. dass ein Ausgabesignal VSR2 des zweiten Maschinenlernmoduls NN2, im Folgenden als zweites Ausgabesignal bezeichnet, möglichst gut mit dem tatsächlichen Verhaltenssignal des technischen Systems TS unter dem Einfluss von Steueraktionen übereinstimmt.

Im Zuge des Trainings wird eine Abweichung D2 zwischen dem zweiten Ausgabesignal VSR2 und den dazu korrespondierenden zweiten Teilen VS2 der Verhaltenssignale VS ermittelt. Die Abweichung D2 repräsentiert hierbei einen Reproduktions- oder Prädiktionsfehler des zweiten Maschinenlernmoduls NN2. Die Abweichung D2 kann beispielsweise als Quadrat oder Betrag einer Differenz, insbesondere einer Vektordifferenz berechnet werden gemäß D2 = (VS2-VSR2)² oder D2 = |VS2-VSR2|.

Die Abweichung D2 wird, wie in Figur 3 durch einen strichlierten Pfeil angedeutet, zum zweiten Maschinenlernmodul NN2 zurückgeführt. Anhand der zurückgeführten Abweichung D2 wird das zweite Maschinenlernmodul NN2 darauf trainiert, diese Abweichung D2 und damit den Reproduktionsfehler zu minimieren. Zur Minimierung der Abweichung D2 können, wie oben bereits erwähnt, eine Vielzahl von bekannten Optimierungsverfahren, insbesondere des überwachten Lernens, verwendet werden.

Das trainierte zweite Maschinenlernmodul NN2 reproduziert mit dem zweiten Ausgabesignal VSR2 ein Verhaltenssignal des technischen Systems TS, das durch aktuelle Anwendung einer Steueraktion induziert wird.

Indem die gefilterten Betriebssignale AS2 und VS2 zum Training verwendet werden, wird das zweite Maschinenlernmodul NN2 besonders effektiv auf dieses Trainingsziel hin trainiert. Darüber hinaus kann durch die Einspeisung des Verhaltenssignals VSR1 in das zweite Maschinenlernmodul NN2 der Trainingserfolg in vielen Fällen noch erheblich gesteigert werden, da dem zweiten Maschinenlernmodul NN2 eine spezifische Information über einen Unterschied zwischen einem steueraktionsinduzierten Systemverhalten und einem steueraktionslosen Systemverhalten zur Verfügung steht. Es sei noch angemerkt, dass das zweite Maschinenlernmodul NN2 auch außerhalb der Steuereinrichtung CTL trainiert werden kann.

Das vorstehende Trainingsverfahren kann in besonders vorteilhafter Weise dazu verwendet werden, mehrere Verhaltenssignale unterschiedlicher im technischen System TS ablaufender Prozesse separat zu reproduzieren. Zu diesem Zweck kann das zweite Maschinenlernmodul NN2 wie das erste Maschinenlernmodul NN1 mehrere prozessspezifische neuronale Teilnetze umfassen, die jeweils separat oder individuell mit prozessspezifischen Verhaltenssignalen, wie oben beschrieben, trainiert werden.

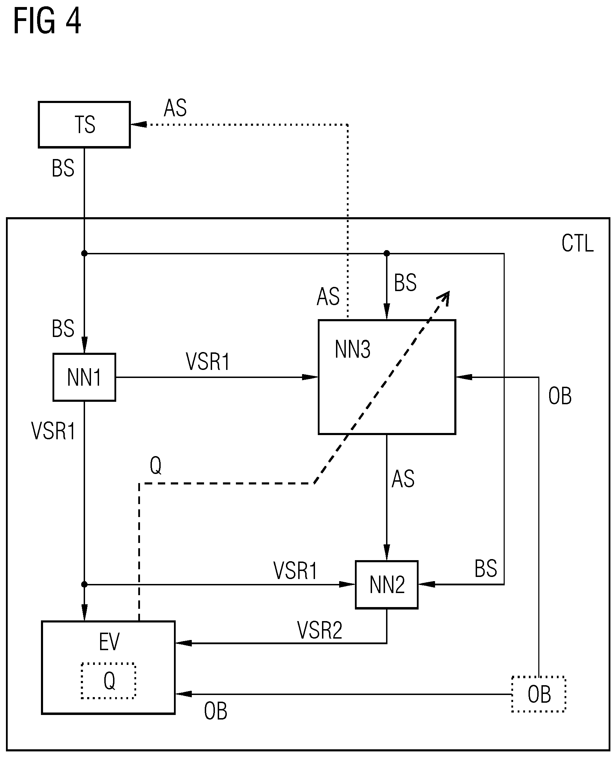

Figur 4 veranschaulicht die Steuereinrichtung CTL in einer dritten Trainingsphase. In der dritten Trainingsphase soll das dritte Maschinenlernmodul NN3 darauf trainiert werden, anhand eines Betriebssignals des technischen Systems TS ein performanzoptimierendes Steueraktionssignal zum Steuern des technischen Systems zu generieren. Unter einem Optimieren sei dabei auch eine Annäherung an ein Optimum verstanden. Durch das Training des dritten Maschinenlernmoduls NN3 wird die Steuereinrichtung CTL zum Steuern des technischen Systems TS konfiguriert.

Zum Training des dritten Maschinenlernmoduls NN3 empfängt die Steuereinrichtung CTL vom technischen System TS Betriebssignale BS des technischen Systems TS als Trainingsdaten. Zu diesem Training werden insbesondere das erste Maschinenlernmodul NN1 und das zweite Maschinenlernmodul NN2 verwendet, die, wie oben beschrieben, trainiert wurden. Im vorliegenden Ausführungsbeispiel ist beim Training des dritten Maschinenlernmoduls NN3 das Training der Maschinenlernmodule NN1 und NN2 bereits abgeschlossen.

Zusätzlich zu den oben beschriebenen Komponenten umfasst die Steuereinrichtung CTL einen Performanzbewerter EV, der mit den Maschinenlernmodulen NN1, NN2 und NN3 gekoppelt ist. Darüber hinaus ist das erste Maschinenlernmodul NN1 mit den Maschinenlernmodulen NN2 und NN3 sowie das zweite Maschinenlernmodul NN2 mit dem dritten Maschinenlernmodul NN3 gekoppelt.

Der Performanzbewerter EV dient dazu, für eine jeweilige Steueraktion eine Performanz des durch diese Steueraktion ausgelösten Verhaltens des technischen Systems TS zu ermitteln. Zu diesem Zweck wird eine Belohnungsfunktion Q ausgewertet. Die Belohnungsfunktion Q ermittelt und quantifiziert eine Belohnung, hier die bereits mehrfach erwähnte Performanz eines aktuellen Systemverhaltens. Eine solche Belohnungsfunktion wird häufig auch als Kostenfunktion, Verlustfunktion, Zielfunktion, Reward-Function oder Value-Function bezeichnet. Die Belohnungsfunktion Q kann beispielsweise als Funktion eines Betriebszustands, einer Steueraktion und eines oder mehrerer Sollwerte OB für ein Systemverhalten implementiert sein.

Falls mehrere Verhaltenssignale durch die Maschinenlernmodule NN1, NN2, NN3 und/oder durch den Performanzbewerter EV ausgewertet werden, können mehrere Verhaltenssignal-Sollwerte OB jeweils spezifisch für ein jeweiliges Verhaltenssignal vorgegeben werden.

Zum Training des dritten Maschinenlernmoduls NN3 werden die Betriebssignale BS als Eingabesignale in die trainierten Maschinenlernmodule NN1 und NN2 sowie in das dritte Maschinenlernmodul NN3 eingespeist.

Anhand der Betriebssignale BS reproduziert das trainierte erste Maschinenlernmodul NN1 ein Verhaltenssignal VSR1 des technischen Systems TS, wie es ohne aktuelle Anwendung einer Steueraktion entstehen würde. Das reproduzierte Verhaltenssignal VSR1 wird vom ersten Maschinenlernmodul NN1 in das zweite Maschinenlernmodul NN2, in das dritte Maschinenlernmodul NN3 sowie in den Performanzbewerter EV eingespeist. Darüber hinaus werden in das dritte Maschinenlernmodul NN3 und in den Performanzbewerter EV ein oder mehrere Verhaltenssignal-Sollwerte OB eingespeist.

Ein aus den Betriebssignalen BS, den reproduzierten Verhaltenssignalen VSR1 und den ein oder mehreren Verhaltenssignal-Sollwerten OB resultierendes Ausgabesignal AS des dritten Maschinenlernmoduls NN3, im Folgenden als drittes Ausgabesignal bezeichnet, wird weiterhin in das trainierte zweite Maschinenlernmodul NN2 als Eingabesignal eingespeist. Anhand des dritten Ausgabesignals AS, des reproduzierten Verhaltenssignals VSR1 sowie der Betriebssignale BS reproduziert das trainierte zweite Maschinenlernmodul NN2 ein steueraktionsinduziertes Verhaltenssignal VSR2 des technischen Systems TS, das vom trainierten zweiten Maschinenlernmodul NN2 in den Performanzbewerter EV eingespeist wird.

Der Performanzbewerter EV quantifiziert anhand des reproduzierten Verhaltenssignals VSR2 unter Berücksichtigung des reproduzierten ersten Verhaltenssignals VSR1 sowie der ein oder mehreren Verhaltenssignal-Sollwerte OB eine aktuelle Performanz des technischen Systems TS. Der Performanzbewerter EV bestimmt hierbei insbesondere eine erste Abweichung des steueraktionsinduzierten Verhaltenssignals VSR2 von den ein oder mehreren Verhaltenssignal-Sollwerten OB. Bei steigender Abweichung wird hierbei in der Regel eine verringerte Steueraktionsperformanz ermittelt. Darüber hinaus wird eine zweite Abweichung zwischen dem steueraktionsinduzierten Verhaltenssignal VSR2 und dem Verhaltenssignal VSR1 ermittelt. Anhand der zweiten Abweichung kann durch den Performanzbewerter EV bewertet werden, wie sich ein Systemverhalten mit Anwendung einer Steueraktion vom Systemverhalten ohne Anwendung dieser Steueraktion unterscheidet. Es erweist sich, dass die Performanzbewertung durch diese Unterscheidung in vielen Fällen erheblich verbessert werden kann.

Die durch die Belohnungsfunktion Q ermittelte Steueraktionsperformanz wird, wie in Figur 4 durch einen strichlierten Pfeil angedeutet, zum dritten Maschinenlernmodul NN3 zurückgeführt. Anhand der zurückgeführten Steueraktionsperformanz wird das dritte Maschinenlernmodul NN3 darauf trainiert, die Steueraktionsperformanz zu maximieren. Zur Maximierung der Steueraktionsperformanz können, wie oben mehrfach erwähnt, eine Vielzahl von bekannten Optimierungsverfahren verwendet werden.

Insofern das zweite Maschinenlernmodul NN2 insbesondere ein Steueraktionssignal als Eingabesignal gewissermaßen erwartet, wird das dritte Maschinenlernmodul NN3 implizit darauf trainiert, ein solches Steueraktionssignal, hier AS, auszugeben. Durch die Optimierung der Steueraktionsperformanz wird das dritte Maschinenlernmodul NN3 somit darauf trainiert, ein performanzoptimierendes Steueraktionssignal AS auszugeben.

Indem neben dem Betriebssignal BS auch das reproduzierte Verhaltenssignal VSR1 zum Training des dritten Maschinenlernmoduls NN3 verwendet wird, kann letzteres besonders effektiv trainiert werden, da dem dritten Maschinenlernmodul NN3 eine spezifische Information über ein steueraktionsloses Systemverhalten zur Verfügung steht.

Ein besonderer Vorteil der Erfindung ist darin zu sehen, dass es beim Training des dritten Maschinenlernmoduls NN3 in vielen Fällen genügt, für einen jeweiligen Zeitpunkt nur jeweils einen einzigen, ggf. anpassbaren Zeitschritt der Verhaltenssignale durch den Performanzbewerter EV auszuwerten. Eine aufwändige Ermittlung oder Schätzung zukünftiger Belohnungen ist häufig nicht erforderlich. Somit können auch auf unterschiedlichen Zeitskalen ablaufende Effekte in effizienter Weise berücksichtigt werden.

Darüber hinaus kann eine vorgegebene Datenmenge von Betriebssignalen mehrfach für das Training des dritten Maschinenlernmoduls NN3 verwendet werden, indem variierende Verhaltenssignal-Sollwerte OB für das Verhaltenssignal VSR2 vorgegeben werden. Dies ermöglicht es, unterschiedliche, sollwertspezifische Steueraktionssignale aus gleichen Betriebssignalen zu erlernen und so eine bessere Abdeckung eines Steueraktionsraums zu erreichen.

Durch das Training des dritten Maschinenlernmoduls NN3 wird die Steuereinrichtung CTL dazu eingerichtet, das technische System TS mittels des Steueraktionssignals AS des trainierten dritten Maschinenlernmoduls NN3 in performanzoptimierender Weise zu steuern.

## Patentansprüche

1. Computerimplementiertes Verfahren zum Konfigurieren einer Steuereinrichtung (CTL) für ein technisches System (TS), wobei
a) ein Betriebssignal (BS) des technischen Systems in ein erstes Maschinenlernmodul (NN1) eingespeist wird, das darauf trainiert ist, anhand des Betriebssignals (BS) des technischen Systems ein spezifisch ohne aktuelle Anwendung einer Steueraktion entstehendes Verhaltenssignal des technischen Systems zu reproduzieren und das reproduzierte Verhaltenssignal (VSR1) als erstes Ausgabesignal auszugeben,
b) das erste Ausgabesignal (VSR1) in ein zweites Maschinenlernmodul (NN2) eingespeist wird, das darauf trainiert wird, anhand eines eine Steueraktion des technischen Systems spezifizierenden oder veranlassenden Steueraktionssignals (AS) ein daraus resultierendes Verhaltenssignal des technischen Systems zu reproduzieren und das reproduzierte Verhaltenssignal (VSR2) als zweites Ausgabesignal auszugeben,
c) das Betriebssignal (BS) des technischen Systems in ein drittes Maschinenlernmodul (NN3) eingespeist wird,
d) ein drittes Ausgabesignal (AS) des dritten Maschinenlernmoduls (NN3) in das trainierte, zweite Maschinenlernmodul (NN2) eingespeist wird,
e) anhand des zweiten Ausgabesignals (VSR2) eine Steueraktionsperformanz (Q) ermittelt wird,
f) das dritte Maschinenlernmodul (NN3) darauf trainiert wird, anhand des Betriebssignals (BS) des technischen Systems die Steueraktionsperformanz (Q) zu optimieren, und
g) die Steuereinrichtung (CTL) anhand des dritten Maschinenlernmoduls (NN3) dazu eingerichtet wird, das technische System mittels eines Ausgabesignals (AS) des trainierten dritten Maschinenlernmoduls (NN3) zu steuern.

2. Verfahren nach Anspruch 1, **dadurch gekennzeichnet,**
**dass** das Training des dritten Maschinenlernmoduls (NN3) ferner anhand des ersten Ausgabesignals (VSR1) erfolgt.

3. Verfahren nach einem der vorhergehenden Ansprüche, **dadurch gekennzeichnet,**
**dass** erste (SS1, VS1) und zweite (AS2, VS2) Teile eines Betriebssignals (BS) des technischen Systems spezifisch danach selektiert werden, ob sie eine Steueraktion umfassen oder nicht, und
**dass** die eine Steueraktion nicht umfassenden, ersten Teile (SS1, VS1) des Betriebssignals (BS) spezifisch zum Training des ersten Maschinenlernmoduls (NN1) und die eine Steueraktion umfassenden, zweiten Teile (AS2, VS2) des Betriebssignals (BS) spezifisch zum Training des zweiten Maschinenlernmoduls (NN2) verwendet werden.

4. Verfahren nach einem der vorhergehenden Ansprüche, **dadurch gekennzeichnet,**
**dass** ein Verhaltenssignal-Sollwert (OB) eingelesen wird,
**dass** das zweite Ausgabesignal (VSR2) mit dem Verhaltenssignal-Sollwert (OB) verglichen wird, und
**dass** die Steueraktionsperformanz (Q) abhängig vom Vergleichsergebnis ermittelt wird.

5. Verfahren nach Anspruch 4, **dadurch gekennzeichnet,**
**dass** der Verhaltenssignal-Sollwert (OB) in das dritte Maschinenlernmodul (NN3) eingespeist wird, und
**dass** das dritte Maschinenlernmodul (NN3) darauf trainiert wird, ferner anhand des Verhaltenssignal-Sollwerts (OB) die Steueraktionsperformanz (Q) zu optimieren.

6. Verfahren nach einem der vorhergehenden Ansprüche, **dadurch gekennzeichnet, dass** die Ermittlung der Steueraktionsperformanz (Q) ferner anhand des ersten Ausgabesignals (VSR1) erfolgt.

7. Verfahren nach Anspruch 6, **dadurch gekennzeichnet,**
**dass** eine Abweichung zwischen dem ersten Ausgabesignal (VSR1) und dem zweiten Ausgabesignal (VSR2) ermittelt wird, und dass die Steueraktionsperformanz (Q) abhängig von der Abweichung ermittelt wird.

8. Verfahren nach einem der vorhergehenden Ansprüche, **dadurch gekennzeichnet,**
**dass** das erste (NN1) und/oder das zweite (NN2) Maschinenlernmodul darauf trainiert ist, mehrere Verhaltenssignale unterschiedlicher im technischen System ablaufender Prozesse separat zu reproduzieren, und
**dass** die Steueraktionsperformanz (Q) abhängig von den reproduzierten Verhaltenssignalen ermittelt wird.

9. Verfahren nach Anspruch 8, **dadurch gekennzeichnet,**
**dass** für ein jeweiliges Verhaltenssignal (VS) ein spezifischer Verhaltenssignal-Sollwert (OB) eingelesen wird, und
**dass** die Steueraktionsperformanz (Q) anhand eines Vergleichs der reproduzierten Verhaltenssignale mit den spezifischen Verhaltenssignal-Sollwerten ermittelt wird.

10. Verfahren nach Anspruch 9, **dadurch gekennzeichnet,**
**dass** das dritte Maschinenlernmodul (NN3) darauf trainiert wird, anhand der spezifischen Verhaltenssignal-Sollwerte (OB) die Steueraktionsperformanz (Q) zu optimieren.

11. Steuereinrichtung (CTL) zum Steuern eines technischen Systems (TS), umfassend Mittel zum Ausführen eines Verfahrens nach einem der vorhergehenden Ansprüche.

12. Computerprogrammprodukt umfassend Befehle, die bewirken, dass die Steuereinrichtung (CTL) nach Anspruch 11 die Verfahrensschritte nach einem der Ansprüche 1 bis 10 ausführt.

13. Computerlesbares Speichermedium mit einem Computerprogrammprodukt nach Anspruch 12.

## Claims

1. Computer-implemented method for configuring a control device (CTL) for a technical system (TS),
wherein
a) an operating signal (BS) of the technical system is fed into a first machine learning module (NN1) that is trained, on the basis of the operating signal (BS) of the technical system, to reproduce a behaviour signal of the technical system that arises specifically without current application of a control action and to output the reproduced behaviour signal (VSR1) as first output signal,
b) the first output signal (VSR1) is fed into a second machine learning module (NN2) that is trained, on the basis of a control action signal (AS) that specifies or triggers a control action of the technical system, to reproduce a resultant behaviour signal of the technical system and to output the reproduced behaviour signal (VSR2) as second output signal,
c) the operating signal (BS) of the technical system is fed into a third machine learning module (NN3),
d) a third output signal (AS) of the third machine learning module (NN3) is fed into the trained second machine learning module (NN2),
e) a control action performance (Q) is determined on the basis of the second output signal (VSR2),
f) the third machine learning module (NN3) is trained to optimize the control action performance (Q) on the basis of the operating signal (BS) of the technical system, and
g) the control device (CTL) is configured, on the basis of the third machine learning module (NN3), to control the technical system by way of an output signal (AS) of the trained third machine learning module (NN3).

2. Method according to Claim 1, **characterized**
**in that** the third machine learning module (NN3) is also trained on the basis of the first output signal (VSR1).

3. Method according to either of the preceding claims, **characterized**
**in that** first (SS1, VS1) and second (AS2, VS2) parts of an operating signal (BS) of the technical system are selected specifically according to whether or not they comprise a control action, and
**in that** the first parts (SS1, VS1) of the operating signal (BS) that do not comprise a control action are used specifically to train the first machine learning module (NN1) and the second parts (AS2, VS2) of the operating signal (BS) that comprise a control action are used specifically to train the second machine learning module (NN2).

4. Method according to one of the preceding claims, **characterized**
**in that** a behaviour signal setpoint value (OB) is read in,
**in that** the second output signal (VSR2) is compared with the behaviour signal setpoint value (OB), and
**in that** the control action performance (Q) is determined depending on the comparison result.

5. Method according to Claim 4, **characterized**
**in that** the behaviour signal setpoint value (OB) is fed into the third machine learning module (NN3), and
**in that** the third machine learning module (NN3) is trained also to optimize the control action performance (Q) on the basis of the behaviour signal setpoint value (OB).

6. Method according to one of the preceding claims, **characterized in that** the control action performance (Q) is also determined on the basis of the first output signal (VSR1).

7. Method according to Claim 6, **characterized**
**in that** a deviation between the first output signal (VSR1) and the second output signal (VSR2) is determined, and
**in that** the control action performance (Q) is determined depending on the deviation.

8. Method according to one of the preceding claims, **characterized**
**in that** the first (NN1) and/or the second (NN2) machine learning module is trained to separately reproduce multiple behaviour signals of different processes running in the technical system, and
**in that** the control action performance (Q) is determined depending on the reproduced behaviour signals.

9. Method according to Claim 8, **characterized**
**in that** a specific behaviour signal setpoint value (OB) is read in for a respective behaviour signal (VS), and
**in that** the control action performance (Q) is determined on the basis of a comparison between the reproduced behaviour signals and the specific behaviour signal setpoint values.

10. Method according to Claim 9, **characterized**
**in that** the third machine learning module (NN3) is trained to optimize the control action performance (Q) on the basis of the specific behaviour signal setpoint values (OB).

11. Control device (CTL) for controlling a technical system (TS), comprising means for carrying out a method according to one of the preceding claims.

12. Computer program product, comprising commands that cause the control device (CTL) according to Claim 11 to carry out the method steps according to one of Claims 1 to 10.

13. Computer-readable storage medium containing a computer program product according to Claim 12.

## Revendications

1. Procédé mis en œuvre par ordinateur pour configurer un dispositif de commande (CTL) pour un système technique (TS), dans lequel
a) un signal de fonctionnement (BS) du système technique est fourni à un premier module d'apprentissage machine (NN1) qui est alors entraîné à reproduire, à l'aide du signal de fonctionnement (BS) du système technique, un signal de comportement du système technique survenant spécifiquement sans application actuelle d'une action de commande et à délivrer le signal de comportement reproduit (VSR1) comme premier signal de sortie,
b) le premier signal de sortie (VSR1) est fourni à un deuxième module d'apprentissage machine (NN2) qui est alors entraîné, à l'aide d'un signal d'action de commande (AS) spécifiant ou provoquant une action de commande du système technique, à reproduire un signal de comportement en résultant du système technique et à délivrer le signal de comportement reproduit (VSR2) comme deuxième signal de sortie,
c) le signal de fonctionnement (BS) du système technique est fourni à un troisième module d'apprentissage machine (NN3),
d) un troisième signal de sortie (AS) du troisième module d'apprentissage machine (NN3) est fourni au deuxième module d'apprentissage machine (NN2) entraîné,
e) à l'aide du deuxième signal de sortie (VSR2) est déterminée une performance d'action de commande (Q),
f) le troisième module d'apprentissage machine (NN3) est alors entraîné à optimiser la performance d'action de commande (Q) à l'aide du signal de fonctionnement (BS) du système technique, et
g) le dispositif de commande (CTL) à l'aide du troisième module d'apprentissage machine (NN3) est configuré pour commander le système technique au moyen d'un signal de sortie (AS) du troisième module d'apprentissage machine (NN3) entraîné.

2. Procédé selon la revendication 1, **caractérisé en ce que** l'entraînement du troisième module d'apprentissage machine (NN3) se fait, en outre, à l'aide du premier signal de sortie (VSR1).

3. Procédé selon l'une des revendications précédentes, **caractérisé en ce que** des premières (SS1, VS1) et deuxièmes (AS2, VS2) parties d'un signal de fonctionnement (BS) du système technique sont sélectionnées spécifiquement selon qu'elles comprennent ou non une action de commande, et
**en ce que** les premières parties (SS1, VS1), ne comprenant pas une action de commande, du signal de fonctionnement (BS) sont utilisées spécifiquement pour l'entraînement du premier module d'apprentissage machine (NN1) et les deuxièmes parties (AS2, VS2), comprenant une action de commande, du signal de fonctionnement (BS) sont utilisées spécifiquement pour l'entraînement du deuxième module d'apprentissage machine (NN2).

4. Procédé selon l'une des revendications précédentes, **caractérisé en ce qu'**une valeur de consigne du signal de comportement (OB) est lue,
**en ce que** le deuxième signal de sortie (VSR2) est comparé à la valeur de consigne du signal de comportement (OB), et **en ce que** la performance d'action de commande (Q) est déterminée en fonction du résultat de la comparaison.

5. Procédé selon la revendication 4, **caractérisé en ce que** la valeur de consigne du signal de comportement (OB) est fournie au troisième module d'apprentissage machine (NN3), et **en ce que** le troisième module d'apprentissage machine (NN3) est alors entraîné à optimiser en outre la performance d'action de commande (Q) à l'aide de la valeur de consigne du signal de comportement (OB).

6. Procédé selon l'une des revendications précédentes, **caractérisé en ce que** la détermination de la performance d'action de commande (Q) a lieu, en outre, à l'aide du premier signal de sortie (VSR1).

7. Procédé selon la revendication 6, **caractérisé en ce qu'**un écart entre le premier signal de sortie (VSR1) et le deuxième signal de sortie (VSR2) est déterminé, et **en ce que** la performance d'action de commande (Q) est déterminée en fonction de l'écart.

8. Procédé selon l'une des revendications précédentes, **caractérisé en ce que** le premier (NN1) et/ou le deuxième (NN2) module d'apprentissage machine est alors entraîné à reproduire séparément plusieurs signaux de comportement de différents processus se déroulant dans le système technique, et **en ce que** la performance d'action de commande (Q) est déterminée en fonction des signaux de comportement reproduits.

9. Procédé selon la revendication 8, **caractérisé en ce que** pour un signal de comportement respectif (VS) est lue une valeur de consigne du signal de comportement spécifique (OB), et
**en ce que** la performance d'action de commande (Q) est déterminée à l'aide d'une comparaison des signaux de comportement reproduits avec les valeurs de consigne du signal de comportement spécifiques.

10. Procédé selon la revendication 9, **caractérisé en ce que** le troisième module d'apprentissage machine (NN3) est alors entraîné à optimiser la performance d'action de commande (Q) à l'aide des valeurs de consigne du signal de comportement spécifiques (OB).

11. Dispositif de commande (CTL) pour commander un système technique (TS) comprenant des moyens pour exécuter un procédé selon l'une des revendications précédentes.

12. Produit de programme informatique comprenant des instructions ayant pour effet que le dispositif de commande (CTL) selon la revendication 11 effectue les étapes du procédé selon l'une des revendications 1 à 10.

13. Support d'enregistrement lisible par ordinateur avec un produit de programme informatique selon la revendication 12.
